# EUROPEAN PATENT APPLICATION

(11) **EP 4 699 877 A1**
(43) Date of publication of application: **25.02.2026**
(21) Application number: 24792148.9
(22) Date of filing: 19.04.2024
(51) Int. Cl.: B60W 20/00, B60W 10/06, B60W 10/08, B60W 30/182, B60K 6/52, B60K 6/20

(54) **MODE SWITCHING CONTROL METHOD AND DEVICE FOR HYBRID VEHICLE, STORAGE MEDIUM, AND VEHICLE**

(30) Priority: 21.04.2023 CN 202310443644
(71) Applicant: Hycet Transmission System (Jiangsu) Co., Ltd., Zhenjiang, Jiangsu 212200 (CN)
(72) Inventor: ZHENG, Yunlong, Zhenjiang, Jiangsu 212200 (CN); CHANG, Xiao, Zhenjiang, Jiangsu 212200 (CN)
(74) Representative: Murgitroyd & Company
(86) International application number: PCT/CN2024/088938
(87) International publication number: WO 2024/217565

(57) **Abstract**

A mode switching control method and device for a hybrid vehicle, a storage medium, and a vehicle, relating to the technical field of vehicle control. The method comprises: acquiring a current driving mode and travelling state information of a vehicle; on the basis of the current driving mode and the travelling state information, determining whether the vehicle is in a target working condition; and when it is determined that the vehicle is in the target working condition, controlling the vehicle to switch from the current driving mode to an idling electric four-wheel drive mode. According to the method, when it is detected that the vehicle is in the target working condition, the vehicle can be controlled to enter the idling electric four-wheel drive mode, so that the normal driving requirements of the vehicle under the target working condition can be satisfied, the abnormal start and stop phenomena of an engine can be effectively avoided, and the engine is able to quickly output torque, thereby improving the driving experience of a driver.

## Description

### CROSS-REFERENCE TO RELATED APPLICATIONS

This application claims priority to Chinese Patent Application No. 202310443644.7, filed on April 21, 2023, and titled "MODE SWITCHING CONTROL METHOD FOR VEHICLE WITH HYBRID POWER, DEVICE, STORAGE MEDIUM AND VEHICLE". The disclosure of the aforementioned application is hereby incorporated by reference in its entirety.

### TECHNICAL FIELD

The present application relates to the field of vehicle control technologies, and in particular, to a mode switching control method for a vehicle with a hybrid power, a device, a storage medium, and a vehicle.

### BACKGROUND

With the prominence of petroleum and environmental issues, new energy vehicles are rapidly developed, and a vehicle with a hybrid power is becoming more prevalent in households. The vehicle with the hybrid power generally includes an engine and a drive motor, and has two driving modes: an electric vehicle (EV) mode and a hybrid electric vehicle (HEV) mode. In the EV mode, the vehicle is only propelled by the drive motor, such as in a pure electric four-wheel drive mode and a pure electric rear-wheel drive mode. In the HEV mode, the drive motor and the engine need to cooperate to propel the vehicle, such as in a series mode and a direct drive mode.

In related technologies, when a vehicle encounters some special working conditions in the HEV mode, such as the vehicle is stuck due to wheel slippage or emergency braking, an abnormal engine start-stop phenomenon may occur, thereby causing the engine to be prevented from outputting power quickly, and thus affecting driving experience of a driver.

### SUMMARY

The present application provides a mode switching control method for a vehicle with a hybrid power, a device, a storage medium and a vehicle to solve a problem in related technologies that an engine may experience abnormal start-stop during the hybrid mode, which causes the engine to be prevented from outputting power quickly, and affecting driving experience of a driver.

In order to solve the above problems, the present application adopts following technical solutions.

In a first aspect, some embodiments of the present application provide a mode switching control method for a vehicle with a hybrid power. The method includes:
acquiring a current driving mode and a travelling state information of the vehicle;
determining whether the vehicle is in a target working condition based on the current driving mode and the travelling state information, where the target working condition represents a working condition in which an engine of the vehicle experiences an abnormal start-stop phenomena; and
controlling the vehicle to switch from the current driving mode to an idle electric four-wheel drive mode when it is determined that the vehicle is in the target working condition, where in the idle electric four-wheel drive mode, a front drive motor and a rear drive motor of the vehicle are in a driving state, and the engine remains in an idle state.

In some embodiments of the present application, the determining whether the vehicle is in the target working condition based on the current driving mode and the travelling state information includes:
determining an initial working condition of the vehicle based on the travelling state information; and
determining the vehicle is in the target working condition in a case that the current driving mode is a series mode and the initial working condition is a slipping working condition, or, in a case that the current driving mode is a direct drive mode and the initial working condition is a braking working condition.

In some embodiments of the present application, the travelling state information includes a vehicle speed, a master cylinder braking pressure and a speed of each wheel; and
the determining the initial working condition of the vehicle based on the travelling state information includes:
determining the initial working condition is the slipping working condition in a case that the speed of each wheel satisfies a preset slipping condition; and
determining the initial working condition is the braking working condition in a case that the vehicle speed is less than a vehicle speed threshold and/or the master cylinder braking pressure is greater than a pressure threshold.

In some embodiments of the present application, the determining the initial working condition is the slipping working condition in the case that the speed of each wheel satisfies the preset slipping condition includes:
based on the speed of each wheel, determining a first speed difference between a left rear wheel and a right rear wheel and a first duration time of the first speed difference, and a second speed difference between an average speed of two wheels on a front axle and an average speed of two wheels on a rear axle and a second duration time of the second speed difference; and
determining the initial working condition is the slipping working condition in a case that the first speed difference is greater than a first speed difference threshold and the first duration time is greater than a first duration time threshold, or, in a case that the second speed difference is greater than a second speed difference threshold and the second duration time is greater than a second duration time threshold.

In some embodiments of the present application, the controlling the vehicle to switch from the current driving mode to the idle electric four-wheel drive mode includes:
controlling the vehicle to switch from the series mode to the idle electric four-wheel drive mode according to a preset first switching strategy; or
controlling the vehicle to switch from the direct drive mode to the idle electric four-wheel drive mode according to a preset second switching strategy.

In some embodiments of the present application, the controlling the vehicle to switch from the series mode to the idle electric four-wheel drive mode according to the preset first switching strategy includes:
sending a first torque control request containing an idle torque to an engine controller to make the engine controller control a torque of the engine to decrease to the idle torque in response to the first torque control request;
sending a synchronizer gear engagement request and an idle electric four-wheel drive mode activation request to a transmission controller to make the transmission controller control a clutch to open when determining that the torque of the engine is below a torque threshold in response to the idle electric four-wheel drive mode activation request, and control a synchronizer to switch from a neutral position to a target gear position in response to the synchronizer gear engagement request, where the torque threshold is greater than the idle torque; and
when it is determined that the clutch is in an open state, sending an idle activation request to the engine controller when it is determined that the clutch is in an open state to make the engine controller control the engine to remain in the idle state in response to the idle activation request.

In some embodiments of the present application, the controlling the vehicle to switch from the direct drive mode to the idle electric four-wheel drive mode according to the preset second switching strategy includes:
sending a synchronizer gear shift request and an idle electric four-wheel drive mode activation request to a transmission controller to make the transmission controller control a synchronizer to switch from a current gear position to a target gear position in response to the synchronizer gear shift request, and return a torque intervention request containing an idle torque in response to the idle electric four-wheel drive mode activation request;
sending a second torque control request containing the idle torque to an engine controller in response to the torque intervention request to make the engine controller control a torque of the engine to decrease to the idle torque in response to the second torque control request, to make the transmission controller control a clutch to open when it is determined that the torque of the engine has decreased to the idle torque; and
sending an idle activation request to the engine controller when it is determined that the clutch is in an open state to make the engine controller control the engine to remain in the idle state in response to the idle activation request.

In a second aspect, some embodiments of the present application provide a mode switching control device for a vehicle with a hybrid power based on a same concept. The device includes:
an acquisition module, configured to acquire a current driving mode and a travelling state information of the vehicle;
a determination module, configured to determine whether the vehicle is in a target working condition based on the current driving mode and the travelling state information, where the target working condition represents a working condition in which an engine of the vehicle experiences an abnormal start-stop phenomena; and
a control module, configured to control the vehicle to switch from the current driving mode to an idle electric four-wheel drive mode when it is determined that the vehicle is in the target working condition, where in the idle electric four-wheel drive mode, a front drive motor and a rear drive motor of the vehicle are in the driving state, and the engine remains in an idle state.

In some embodiments of the present application, the determination module includes:
an initial working condition determination sub-module, configured to determine an initial working condition of the vehicle based on the travelling state information; and
a target working condition determination sub-module, configured to determine the vehicle is in the target working condition in a case that the current driving mode is a series mode and the initial working condition is a slipping working condition, or, in a case that the current driving mode is a direct drive mode and the initial working condition is a braking working condition.

In some embodiments of the present application, the travelling state information includes a vehicle speed, a master cylinder braking pressure, and a speed of each wheel; and the initial working condition determination sub-module includes:
a slipping working condition determination unit, configured to determine the initial working condition is the slipping working condition in a case that the speed of each wheel satisfies a preset slipping condition; and
a braking working condition determination unit, configured to determine the initial working condition is the braking working condition in a case that the vehicle speed is less than a vehicle speed threshold and/or the master cylinder braking pressure is greater than a pressure threshold.

In some embodiments of the present application, the slipping working condition determination unit includes:
a speed difference determination sub-unit, configured to determine a first speed difference between a left rear wheel and a right rear wheel and a first duration time of the first speed difference, and a second speed difference between an average speed of two wheels on a front axle and an average speed of two wheels on a rear axle and a second duration time of the second speed difference based on the speed of each wheel; and
a slipping working condition determination sub-unit, configured to determine the initial working condition is the slipping working condition in a case that the first speed difference is greater than a first speed difference threshold and the first duration time is greater than a first duration time threshold, or, in a case that the second speed difference is greater than a second speed difference threshold and the second duration time is greater than a second duration time threshold.

In some embodiments of the present application, the control module includes:
a first control sub-module, configured to control the vehicle to switch from the series mode to the idle electric four-wheel drive mode according to a preset first switching strategy; or
a second control sub-module, configured to control the vehicle to switch from the direct drive mode to the idle electric four-wheel drive mode according to a preset second switching strategy.

In some embodiments of the present application, the first control sub-module includes:
a first request sending unit, configured to send a first torque control request containing an idle torque to an engine controller to make the engine controller control a torque of the engine to decrease to the idle torque in response to the first torque control request;
a second request sending unit, configured to send a synchronizer gear engagement request and an idle electric four-wheel drive mode activation request to a transmission controller to make the transmission controller control a clutch to open when determining that the torque of the engine is below a torque threshold in response to the idle electric four-wheel drive mode activation request, and control a synchronizer to switch from a neutral position to a target gear position in response to the synchronizer gear engagement request, where the torque threshold is greater than the idle torque; and
a third request sending unit, configured to send an idle activation request to the engine controller to make the engine controller control the engine to remain in the idle state in response to the idle activation request when it is determined that the clutch is in an open state.

In some embodiments of the present application, the second control sub-module includes:
a fourth request sending unit, configured to send a synchronizer gear shift request and an idle electric four-wheel drive mode activation request to a transmission controller to make the transmission controller control a gear position of a synchronizer to switch from a current gear position to a target gear position in response to the synchronizer gear shift request, and return a torque intervention request containing an idle torque in response to the idle electric four-wheel drive mode activation request;
a fifth request sending unit, configured to send a second torque control request containing the idle torque to an engine controller in response to the torque intervention request to make the engine controller control a torque of the engine to decrease to the idle torque in response to the second torque control request, causing the transmission controller to control a clutch to open when it is determined that the torque of the engine has decreased to the idle torque; and
a sixth request sending unit, configured to send an idle activation request to the engine controller when it is determined that the clutch is in an open state to make the engine controller control the engine to remain in the idle state in response to the idle activation request.

In a third aspect, some embodiments of the present application provide a storage medium based on the same concept. The storage medium stores a machine-executable instruction. When the machine-executable instruction executed by a processor, the mode switching control method for the vehicle with the hybrid power according to the first aspect of the present application is implemented.

In a fourth aspect, some embodiments of the present application provide a vehicle based on the same concept, the vehicle includes a processor and a memory. The memory stores a machine-executable instruction being capable of be executed by the processor, and the processor is configured to execute the machine-executable instruction to implement the mode switching control method for the vehicle with the hybrid power according to the first aspect of the present application.

Compared with the conventional technologies, the present application includes following advantages.

According to some embodiments of the present application, a mode switching control method for a vehicle with a hybrid power is provided, including: acquiring a current driving mode and a travelling state information of the vehicle; determining whether the vehicle is in a target working condition based on the current driving mode and the travelling state information; controlling the vehicle to switch from the current driving mode to an idle electric four-wheel drive mode when it is determined that the vehicle is in the target working condition. According to some embodiments of the present application, the vehicle is controlled to enter the idle electric four-wheel drive mode when detecting that the vehicle is in the target working condition which is prone to causing an abnormal engine start-stop phenomena of the vehicle. Since in the idle electric four-wheel drive mode, a front drive motor and a rear drive motor of the vehicle are in a driving state, and an engine remains in an idle state. Therefore, not only a normal driving requirement of the vehicle in the target working condition is ensured, but also an abnormal engine shutdown and frequent start-stop phenomena are effectively avoided, so that the engine is enabled to output a torque quickly, thereby achieving faster power response of the engine, and thus improving driving experience of a driver.

### BRIEF DESCRIPTION OF THE DRAWINGS

FIG. 1 is a schematic structural diagram of a vehicle with a hybrid power provided by some embodiments of the present application.
FIG. 2 is a flowchart of steps of a mode switching control method for a vehicle with a hybrid power provided by some embodiments of the present application.
FIG. 3 is a schematic diagram of functional modules of a mode switching control device for a vehicle with a hybrid power provided by some embodiments of the present application.
FIG. 4 is a schematic structural diagram of a vehicle provided by some embodiments of the present application.

### DETAILED DESCRIPTION OF THE EMBODIMENTS

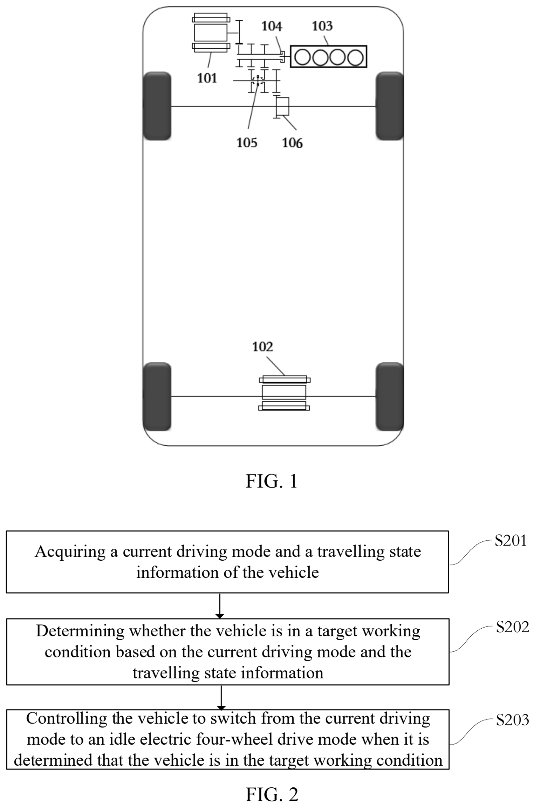

With reference to FIG. 1, a schematic structural diagram of a vehicle with a hybrid power in some embodiments of the present application is shown. The vehicle with the hybrid power includes a front drive motor 101, a rear drive motor 102, an engine 103, a clutch 104, a synchronizer 105 and a differential 106. The front drive motor 101 is connected to an end of an input shaft, the other end of the input shaft is connected to the engine 103 via the clutch 104, the input shaft is connected to an output shaft via a gear set, and a transmission gear meshing with the differential 106 is connected to the output shaft. The synchronizer 105 is connected to the gear set, and is used for synchronizing gear rotational speeds between different gear positions. The rear drive motor 102 is disposed on a rear axle, and is used for providing power to a rear wheel via a rear drive shaft to drive the vehicle.

The vehicle with the hybrid power adopting the above architecture is simultaneously equipped with the front drive motor 101, the rear drive motor 102 and the engine 103. Therefore, to meet different road conditions and driving demands, it is typically configured with a plurality of driving modes, including a direct drive mode and a pure electric four-wheel drive mode. In the pure electric four-wheel drive mode, the engine 103 is shut down, the clutch 104 is opened, the synchronizer 105 is engaged, and the vehicle is driven by the front drive motor 101 and the rear drive motor 102 together. In the direct drive mode, the clutch 104 is closed, the synchronizer 105 is engaged, and the vehicle is driven by the engine 103, the front drive motor 101 and the rear drive motor 102 together. In a series mode, the engine 103 is running, the clutch 104 is closed, and the synchronizer 105 is in neutral, the engine 103 drives the front drive motor 101 to generate electricity via the clutch 104, and the generated electricity energy is supplied to the rear drive motor 102 to drive the vehicle.

An inventor of the present application found that when the vehicle encounters some special working conditions in the series mode or the direct drive mode, abnormal start-stop phenomena of the engine 103 are prone to occur, which may specifically include an abnormal shutdown phenomenon and a frequent start-stop phenomenon of the engine 103. For example, when the vehicle is driven in the series mode on a low adhesion road surface, such as driving or starting on a muddy road section, a road with loose soil, or a road covered with thick snow, rear wheels are prone to be trapped due to wheel slippage. During the process of the vehicle getting out of being trapped, since only the rear drive motor 102 may be relied upon to drive the vehicle, sufficient adhesion may not be provided, resulting in poor escape effect and easily causing the abnormal shutdown and the frequent start-stop phenomena of the engine 103. When the vehicle is driving in the direct drive mode, if it encounters conditions, such as a vehicle in front braking suddenly or a pedestrian crossing the road suddenly, emergency braking is required. During a forced braking process of the vehicle, a speed of the vehicle decreases rapidly, so that the engine 103 is prone to be abnormally dragged to shut down. Moreover, during a process that the vehicle is driving at a low speed in the direct drive mode, the engine 103 is also prone to experience the frequent start-stop phenomena.

In view of the defects existing in the above background technology, the present application aims to provide a mode switching control method for a vehicle with a hybrid power. By developing an idle electric four-wheel drive mode, the vehicle is controlled to enter the idle electric four-wheel drive mode when it is detected that the vehicle is in a target working condition which is prone to causing an abnormal engine start-stop phenomenon of the vehicle, thereby avoiding abnormal shutdown and frequent start-stop phenomena of the engine, so that the engine will output a torque quickly, thereby achieving faster power response of the engine, and thus improving driving experience of a driver.

With reference to FIG. 2, a mode switching control method for a vehicle with a hybrid power of the present application is shown, the method may include following steps:
S201: acquiring a current driving mode and a travelling state information of the vehicle.

It should be noted that some embodiments of the present application will be described with a vehicle control unit (Vehicle Control Unit, VCU) as an execution entity. It should be noted that the execution entity of the vehicle is not specifically limited in some embodiments of the present application.

It should be noted that the current driving mode of the vehicle refers to a power mode of a vehicle power system, including but not limited to a pure electric four-wheel drive mode, a pure electric rear-wheel drive mode, a series mode, a direct drive mode, and the like. The travelling state information of the vehicle includes the travelling state information of the vehicle and/or driver operation information.

In some embodiments of the present application, the VCU may determine whether the vehicle is in the target working condition which is prone to causing an abnormal engine start-stop phenomena of the vehicle by acquiring the current driving mode and the travelling state information of the vehicle.

S202: determining whether the vehicle is in a target working condition based on the current driving mode and the travelling state information.

It should be noted that the target working condition represents a working condition in which the engine of the vehicle experiences an abnormal start-stop phenomena. Since the engine is required to operate when the vehicle is in a hybrid mode, the vehicle may enter the target working condition in the hybrid mode. That is, when the vehicle is driving in the series mode or the direct drive mode, the vehicle may enter the target working condition when encountering some special road conditions, such as entering a slippery road surface or performing forced braking, which may cause abnormal engine start-stop of the vehicle.

In some embodiments of the present application, when the vehicle is in the series mode or the direct drive mode, by analyzing the travelling state information, whether the vehicle is in the target working condition may be effectively determined, thereby effectively avoiding misjudgment and incorrect switching of the current driving mode of the vehicle.

S203: controlling the vehicle to switch from the current driving mode to an idle electric four-wheel drive mode when it is determined that the vehicle is in the target working condition.

It should be noted that in the idle electric four-wheel drive mode, a synchronizer is engaged, a front drive motor and a rear drive motor of the vehicle are in a driving state, the engine is in an idle state, and a clutch is in a disengaged state. In this mode, the vehicle is driven forward by the front drive motor and the rear drive motor, and the engine is in a started state but does not output a torque.

In some embodiments of the present application, if the VCU detects that the vehicle is in the target working condition, the vehicle is controlled to switch from the current driving mode to the idle electric four-wheel drive mode at the first time. Since the front drive motor and the rear drive motor of the vehicle are in the driving state in the idle electric four-wheel drive mode, this mode may take into account driving safety, vehicle acceleration, low-adhesion driving and low-adhesion climbing performance simultaneously. For example, the adhesion of the front wheels and the rear wheels may be fully utilized to help the vehicle drive on a low adhesion road surface. Meanwhile, since the engine is maintained in the idle state, it may effectively avoid the abnormal shutdown and the frequent start-stop phenomena of the engine, so that when it is necessary to start the engine to output a torque, the engine will quickly output the torque, thereby achieving faster engine power response, and thus improving the driving experience of the driver.

In one example, when the driver drives on a low adhesion road surface in the series mode, since the vehicle is driven only by the rear drive motor, sufficient adhesion may not be provided, thereby causing the vehicle to slip. After the slipping phenomenon is detected by the VCU, the vehicle is controlled to switch from the series mode to the idle electric four-wheel drive mode. Then, the vehicle is driven by the front drive motor and the rear drive motor together, and a torque of a slipping axle is transferred to a non-slipping axle, so that the adhesion of the front wheels and the rear wheels is fully utilized to help the vehicle escape. After the vehicle is escaped, the driver steps on an accelerator. If it is detected by the VCU that an opening degree of an accelerator pedal is greater than a first opening threshold, the vehicle is controlled to switch from the idle electric four-wheel drive mode back to the series mode automatically; or, if it is detected by the VCU that the opening degree of the accelerator pedal is greater than a second opening threshold and a current battery level of a power battery is greater than a state of charge threshold, the vehicle is automatically controlled to switch from the idle electric four-wheel drive mode to the direct drive mode, where the second opening threshold is greater than the first opening threshold. Since the engine is in the idle state under the idle electric four-wheel drive mode, after the vehicle is escaped, the clutch may be controlled to close quickly according to a power demand of the driver and a battery condition, so that the vehicle may be switched from the idle electric four-wheel drive mode to the series mode or the direct drive mode more quickly. Compared with a traditional strategy of switching from the pure electric four-wheel drive to the series mode or the direct drive mode, which takes a long time to start the engine, a starting time for the engine may be effectively reduced, and thus the torque may be output by the engine more quickly.

In another example, when the driver drives in the direct drive mode encountering a pedestrian crossing the road, emergency braking is performed. After the VCU detects the vehicle is in an emergency braking state, the vehicle is controlled to switch from the direct drive mode to the idle electric four-wheel drive mode. By controlling the engine to remain in the idle state, it is ensured that the engine is not dragged to shut down and will not start and stop frequently during a deceleration process. After the pedestrian crosses the road, the driver steps on the accelerator. If it is detected by the VCU that the opening degree of the accelerator pedal is greater than a third opening threshold, the vehicle is automatically controlled to switch from the idle electric four-wheel drive mode back to the direct drive mode, so that the fast power response of the engine is realized, and thus the driving experience of the driver is improved.

In some embodiments of the present application, the S202 may specifically include following sub-steps:
S202-1: determining an initial working condition of the vehicle based on the travelling state information.

In some embodiments of the present application, the VCU may determine the current initial working condition of the vehicle by analyzing the travelling state information of the vehicle. The initial working condition represents a category of the working condition in which the vehicle is located without considering the driving mode, such as a high-speed driving condition, a slipping working condition, a braking working condition, and the like.

In some embodiments of the present application, considering that the abnormal shutdown and frequent start-stop phenomena of the engine are likely to occur when slip happens in the series mode, or when the vehicle brakes or travels at a low speed in the direct drive mode, targeted detection will be performed for two cases in the initial working condition: the slipping working condition and the braking working condition.

S202-2: determining the vehicle is in the target working condition in a case that the current driving mode is the series mode and the initial working condition is the slipping working condition, or, in a case that the current driving mode is the direct drive mode and the initial working condition is the braking working condition.

In some embodiments of the present application, after it is detected that the initial working condition is the slipping working condition, the VCU will determine whether the current driving mode is the series mode. If the current driving mode is the series mode, it is determined that the vehicle is in the target working condition; or, after it is detected that the initial working condition is the braking working condition, the VCU will determine whether the current driving mode is the direct drive mode. If the current driving mode is the direct drive mode, similarly, it is determined that the vehicle is in the target working condition.

In some embodiments of the present application, the travelling state information includes a vehicle speed, a master cylinder braking pressure, and a speed of each wheel. The S202-1 may specifically include following sub-steps:
S202-1-1: determining the initial working condition is the slipping working condition in a case that the speed of each wheel satisfies a preset slipping condition.

In some embodiments of the present application, the VCU may effectively determine whether the vehicle is in the slipping working condition by analyzing the speed of each wheel.

In specific implementations, a first speed difference between a left rear wheel and a right rear wheel and a first duration time of the first speed difference, and a second speed difference between an average speed of two wheels on a front axle and an average speed of two wheels on a rear axle and a second duration time of the second speed difference are first determined based on the speed of each wheel. Then, the initial working condition is determined as the slipping working condition upon a condition that the first speed difference is greater than a first speed difference threshold and the first duration time is greater than a first duration time threshold, or upon a condition that the second speed difference is greater than a second speed difference threshold and the second duration time is greater than a second duration time threshold.

In some embodiments of the present application, by detecting the first speed difference between the left rear wheel and the right rear wheel, it is possible to determine whether there is a slipping phenomenon between the left rear wheel and the right rear wheel of the vehicle; and by detecting the second speed difference between the average speed of two wheels on the front axle and the average speed of two wheels on the rear axle, it is possible to determine whether there is a slipping phenomenon between the front wheel and the rear wheel of the vehicle. At the same time, by detecting the duration time of the slipping phenomenon, a brief slipping phenomenon that occurs during the driving process of the vehicle may be ignored, and thus frequent switching of the driving mode may be avoided.

S202-1-2: determining the initial working condition is the braking working condition in a case that the vehicle speed is less than a vehicle speed threshold and/or the master cylinder braking pressure is greater than a pressure threshold.

In some embodiments of the present application, by detecting the master cylinder braking pressure, it is possible to determine whether the driver is performing forced braking. Specifically, when the master cylinder braking pressure is detected to be greater than the pressure threshold, the vehicle is considered to be in the braking working condition. It should be noted that it is also possible to determine whether the vehicle is in the braking working condition by detecting a travel of a brake pedal, that is, the initial working condition is determined as the braking working condition upon a condition that the travel of the brake pedal is detected to be greater than a travel threshold.

In some embodiments of the present application, considering that the vehicle may frequently start and stop when decelerating to a low speed in the direct drive mode or when driving at a low speed in a congested area, therefore, the initial working condition is similarly considered to be the braking working condition when the vehicle speed is detected to be less than the vehicle speed threshold.

In some embodiments of the present application, by considering the vehicle speed and the master cylinder braking pressure comprehensively, whether the vehicle is in the braking working condition may be accurately determined, and then the vehicle is controlled to switch to the idle electric four-wheel drive mode when the vehicle is simultaneously detected to be in the direct drive mode.

In a feasible embodiment, the S203 may specifically include following sub-steps:
S203-1: controlling the vehicle to switch from the series mode to the idle electric four-wheel drive mode according to a preset first switching strategy.

In some embodiments of the present application, when the vehicle is in the series mode, the synchronizer is in a neutral position, and the clutch is closed. Therefore, to smoothly switch the vehicle from the series mode to the idle electric four-wheel drive mode, the clutch may be controlled to open and the synchronizer may be controlled to engage according to the preset first switching strategy, thereby realizing the switching of the driving mode of the vehicle.

In a specific implementation, the S203-1 may include following sub-steps:

S203-1-1: sending a first torque control request containing an idle torque to an engine controller to make the engine controller control a torque of the engine to decrease to the idle torque in response to the first torque control request.

In some embodiments of the present application, when it is determined that the vehicle enters the target working condition in the series mode, the VCU will execute the first switching strategy by directly sending the first torque control request containing the idle torque to the engine controller to control the engine controller to decrease the torque of the engine to the idle torque.

It should be noted that, to ensure the power demand of the vehicle during the process of decreasing the torque of the engine, the VCU will send a torque increase request of a rear drive motor to a motor controller to make the motor controller increase a torque of the rear drive motor to a first target torque in response to the torque increase request of the rear drive motor. Meanwhile, the VCU will send a torque decrease request of a front drive motor to the motor controller to make the motor controller decrease a torque of the front drive motor to a second target torque in response to the torque decrease request of the front drive motor, where the second target torque may be set to 0 N·m, and the increased torque of the rear drive motor may be numerically equal to the decreased torque of the front drive motor to ensure that no jerking phenomenon occurs during the mode switching process of the vehicle, thereby making the mode switching smoother.

S203-1-2: sending a synchronizer gear engagement request and an idle electric four-wheel drive mode activation request to a transmission controller to make the transmission controller control a clutch to open when determining that the torque of the engine is below a torque threshold in response to the idle electric four-wheel drive mode activation request, and control a synchronizer to switch from a neutral position to a target gear position in response to the synchronizer gear engagement request.

In some embodiments of the present application, the VCU will also send the synchronizer gear engagement request and the idle electric four-wheel drive mode activation request to the transmission controller, and the transmission controller will monitor the torque of the engine in real time. Since the torque threshold is greater than the idle torque, and the torque of the engine has already been pre-reduced to the idle torque, when it is detected that the torque of the engine is lower than the torque threshold, the torque of the engine already satisfies the clutch opening condition. At this time, the transmission controller will control the clutch to switch from the closed state to the open state within 50 ms.

In some embodiments of the present application, to ensure the safety of the synchronizer gear shifting, after it is detected that the clutch is in the open state, the VCU will send the gear shift operation signal to the transmission controller. Then the transmission controller will control the synchronizer to switch from the neutral position to the target gear position when simultaneously receiving the gear shift operation signal and the synchronizer gear engagement request. The target gear position is usually set to a first gear.

In some embodiments of the present application, after the synchronizer is successfully engaged in the first gear, the VCU will control the front drive motor and the rear drive motor to output torque according to a preset torque distribution strategy to drive the vehicle together.

S203-1-3: sending an idle activation request to the engine controller to make the engine controller control the engine to remain in the idle state in response to the idle activation request when it is determined that the clutch is in an open state.

In some embodiments of the present application, after it is detected that the clutch is in the open state, the VCU will send the idle activation request to the engine controller to instruct the engine controller to control the engine to remain in the idle state. Meanwhile, the VCU will also send an actual operation mode setting information to the transmission controller, which is used for instructing the transmission controller that the vehicle has been switched from the series mode to the idle electric four-wheel drive mode.

S203-2: controlling the vehicle to switch from the direct drive mode to the idle electric four-wheel drive mode according to a preset second switching strategy.

In some embodiments of the present application, when the vehicle is in the direct drive mode, the synchronizer is in the first gear or a second gear, and the clutch is closed. Therefore, to smoothly switch the vehicle from the series mode to the idle electric four-wheel drive mode, the clutch is required to be controlled to open and the synchronizer is required to be controlled to engage in the first gear according to the preset second switching strategy, thereby realizing the switching of the driving mode of the vehicle.

In a specific implementation, the S203-2 may include following sub-steps:
S203-2-1: sending a synchronizer gear shift request and an idle electric four-wheel drive mode activation request to a transmission controller to make the transmission controller control a gear position of a synchronizer to switch from a current gear position to a target gear position in response to the synchronizer gear shift request, and return a torque intervention request containing an idle torque in response to the idle electric four-wheel drive mode activation request.

It should be noted that, different from the series mode, in the direct drive mode, the vehicle speed and the torque of the engine are relatively large. When switching from the direct drive mode to the idle electric four-wheel drive mode, the torque of the engine is required to be controlled to decrease to the idle torque more accurately and quickly. Therefore, the transmission controller is required to participate in the torque control of the engine, thereby ensuring that the engine realizes rapid torque reduction smoothly.

In a specific implementation, when it is determined that the vehicle enters the target working condition in the direct drive mode, the VCU will send the synchronizer gear shift request and the idle electric four-wheel drive mode activation request to the transmission controller. On one hand, after receiving the synchronizer gear shift request, the transmission controller will control the synchronizer to switch from the current gear position to the target gear position, where the target gear position is the first gear. If the current gear position of the synchronizer is already the first gear, the gear position of the synchronizer remains unchanged; or if the current gear position of the synchronizer is the second gear, the synchronizer is controlled to switch from the second gear to the first gear to complete the synchronizer gear shift operation. On the other hand, after acquiring the idle electric four-wheel drive mode activation request, the transmission controller will return the torque intervention request containing the idle torque to the VCU to instruct the VCU to control the torque of the engine.

S203-2-2: sending a second torque control request containing the idle torque to an engine controller in response to the torque intervention request to make the engine controller control a torque of the engine to decrease to the idle torque in response to the second torque control request, to make the transmission controller control a clutch to open when it is determined that the torque of the engine has decreased to the idle torque.

In some embodiments of the present application, after receiving the torque intervention request, the VCU will send the second torque control request containing the idle torque to the engine controller to control the engine controller to decrease the torque of the engine to the idle torque quickly. Then the transmission controller controls the clutch to open after detecting that the torque of the engine has already quickly decreased to the idle torque.

In some embodiments of the present application, since the transmission controller participates in the torque control of the engine, the transmission controller may realize a series of operations such as rapid engine torque reduction and clutch opening more precisely and smoothly, thereby avoiding mode switching failure which affects the driving experience of a user.

S203-2-3: sending an idle activation request to the engine controller when it is determined that the clutch is in an open state to make the engine controller control the engine to remain in the idle state in response to the idle activation request.

In some embodiments of the present application, after detecting that the clutch is in the open state, the VCU will send the idle activation request to the engine controller to instruct the engine controller to control the engine to remain in the idle state. Meanwhile, the VCU will send a crankshaft end torque request containing 0 N·m to the transmission controller. After detecting that the clutch is in the open state and receiving the crankshaft end torque request, the transmission controller will reset the value in the torque intervention request to a greater threshold, such as 401 N·m, and will not send the torque intervention request to the VCU, that is, the transmission controller will no longer participate in the torque control of the engine, and the engine is controlled to remain in the idle state by the engine controller.

In some embodiments of the present application, for a scenario where the vehicle experiences the slipping working condition in the low speed series mode, rapid switching of the vehicle from the series mode to the idle electric four-wheel drive mode may be realized through the first switching strategy; and for scenarios where the vehicle experiences the braking working condition in the high speed direct drive mode or low-speed driving in the direct drive mode, the rapid switching of the vehicle from the direct drive mode to the idle electric four-wheel drive mode may be realized through the second switching strategy. Through the coordinated application of the first switching strategy and the second switching strategy, the rapid switching of the vehicle driving modes may be realized in various scenarios where the engine experiences frequent start-stop, which not only ensures the normal driving requirements of the vehicle in various scenarios, but also effectively avoids abnormal shutdown and frequent start-stop phenomena of the engine, thereby improving the driving experience of the driver.

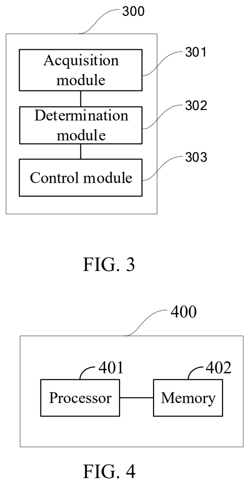

In a second aspect, based on a same concept, referring to FIG. 3, some embodiments of the present application provide a mode switching control device for a vehicle with a hybrid power 300. The mode switching control device for the vehicle with the hybrid power 300 includes:
an acquisition module 301, configured to acquire a current driving mode and a travelling state information of the vehicle;
a determination module 302, configured to determine whether the vehicle is in a target working condition based on the current driving mode and the travelling state information, where the target working condition represents a working condition in which an engine of the vehicle experiences an abnormal start-stop phenomena; and
a control module 303, configured to control the vehicle to switch from the current driving mode to an idle electric four-wheel drive mode when it is determined that the vehicle is in the target working condition, where in the idle electric four-wheel drive mode, a front drive motor and a rear drive motor of the vehicle are in the driving state, and the engine remains in an idle state.

In some embodiments of the present application, the determination module 302 includes:
an initial working condition determination sub-module, configured to determine an initial working condition of the vehicle based on the travelling state information; and
a target working condition determination sub-module, configured to determine the vehicle is in the target working condition in a case that the current driving mode is a series mode and the initial working condition is a slipping working condition, or, in a case that the current driving mode is a direct drive mode and the initial working condition is a braking working condition.

In some embodiments of the present application, the travelling state information includes a vehicle speed, a master cylinder braking pressure, and a speed of each wheel; and the initial working condition determination sub-module includes:
a slipping working condition determination unit, configured to determine the initial working condition is the slipping working condition in a case that the speed of each wheel satisfies a preset slipping condition; and
a braking working condition determination unit, configured to determine the initial working condition is the braking working condition in a case that the vehicle speed is less than a vehicle speed threshold and/or the master cylinder braking pressure is greater than a pressure threshold.

In some embodiments of the present application, the slipping working condition determination unit includes:
a speed difference determination sub-unit, configured to determine a first speed difference between a left rear wheel and a right rear wheel and a first duration time of the first speed difference, and a second speed difference between an average speed of two wheels on a front axle and an average speed of two wheels on a rear axle and a second duration time of the second speed difference based on the speed of each wheel; and
a slipping working condition determination sub-unit, configured to determine the initial working condition is the slipping working condition in a case that the first speed difference is greater than a first speed difference threshold and the first duration time is greater than a first duration time threshold, or, in a case that the second speed difference is greater than a second speed difference threshold and the second duration time is greater than a second duration time threshold.

In some embodiments of the present application, the control module 303 includes:
a first control sub-module, configured to control the vehicle to switch from the series mode to the idle electric four-wheel drive mode according to a preset first switching strategy; or
a second control sub-module, configured to control the vehicle to switch from the direct drive mode to the idle electric four-wheel drive mode according to a preset second switching strategy.

In some embodiments of the present application, the first control sub-module includes:
a first request sending unit, configured to send a first torque control request containing an idle torque to an engine controller to make the engine controller control a torque of the engine to decrease to the idle torque in response to the first torque control request;
a second request sending unit, configured to send a synchronizer gear engagement request and an idle electric four-wheel drive mode activation request to a transmission controller to make the transmission controller control a clutch to open when determining that the torque of the engine is below a torque threshold in response to the idle electric four-wheel drive mode activation request, and control a synchronizer to switch from a neutral position to a target gear position in response to the synchronizer gear engagement request, where the torque threshold is greater than the idle torque; and
a third request sending unit, configured to send an idle activation request to the engine controller to make the engine controller control the engine to remain in the idle state in response to the idle activation request when it is determined that the clutch is in an open state.

In some embodiments of the present application, the second control sub-module includes:
a fourth request sending unit, configured to send a synchronizer gear shift request and an idle electric four-wheel drive mode activation request to a transmission controller to make the transmission controller control a gear position of a synchronizer to switch from a current gear position to a target gear position in response to the synchronizer gear shift request, and return a torque intervention request containing an idle torque in response to the idle electric four-wheel drive mode activation request;
a fifth request sending unit, configured to send a second torque control request containing the idle torque to an engine controller in response to the torque intervention request to make the engine controller control a torque of the engine to decrease to the idle torque in response to the second torque control request, causing the transmission controller to control a clutch to open when it is determined that the torque of the engine has decreased to the idle torque; and
a sixth request sending unit, configured to send an idle activation request to the engine controller when it is determined that the clutch is in an open state to make the engine controller control the engine to remain in the idle state in response to the idle activation request.

It should be noted that the specific implementation of the mode switching control device for the vehicle with the hybrid power 300 in some embodiments of the present application please refer to the specific implementation of the mode switching control method for the vehicle with the hybrid power proposed in the first aspect of the present application, and details will not be repeated herein.

In a third aspect, some embodiments of the present application provide a storage medium based on the same concept. The storage medium stores a machine-executable instruction. When the machine-executable instruction executed by a processor, the mode switching control method for the vehicle with the hybrid power according to the first aspect of the present application is implemented.

It should be noted that the specific implementation of the storage medium in some embodiments of the present application please refer to the specific implementation of the mode switching control method for the vehicle with the hybrid power proposed in the first aspect of the present application, and details will not be repeated herein.

In a fourth aspect, based on the same concept, referring to FIG. 4, some embodiments of the present application provide a vehicle 400, including a processor 401 and a memory 402. The memory 402 stores a machine-executable instruction being capable of be executed by the processor 401, and the processor 401 is configured to execute the machine-executable instruction to implement the mode switching control method for the vehicle with the hybrid power according to the first aspect of the present application.

It should be noted that the specific implementation of the vehicle 400 in some embodiments of the present application please refer to the specific implementation of the mode switching control method for the vehicle with the hybrid power proposed in the first aspect of the present application, and details will not be repeated herein.

Those skilled in the art should understand that, some embodiments of the present application may be provided as a method, a device, or a computer program product. Therefore, some embodiments of the present application may be implemented in the form of a complete hardware embodiment, a complete software embodiment, or an embodiment combining software and hardware aspects. Moreover, some embodiments of the present application may take the form of a computer program product implemented on one or more computer-usable storage medium (including but not limited to disk memory, compact disc read-only memory (Compact Disc Read-Only Memory, CD-ROM), optical memory, and so on) containing a computer-usable program code.

Some embodiments of the present application are described with reference to flowcharts and/or block diagrams of methods, terminal devices (systems), and computer program products according to some embodiments of the present application. It should be understood that, each process and/or block in the flowcharts and/or block diagrams, and the combination of processes and/or blocks in the flowcharts and/or block diagrams, may be implemented by computer program instructions. These computer program instructions may be provided to a processor of a general-purpose computer, a special-purpose computer, an embedded processor, or other programmable data processing terminal devices to produce a machine, so that the instructions executed by the computer or the other programmable data processing terminal devices produce a device for implementing the functions specified in one or more processes in the flowchart and/or one or more blocks in the block diagram.

These computer program instructions may also be stored in a computer-readable memory that may direct a computer or the other programmable data processing terminal devices to function in a specific manner, so that the instructions stored in the computer-readable memory produce a manufactured product including an instruction device that implements the function specified in one or more processes in the flowchart and/or one or more blocks in the block diagram.

These computer program instructions may also be loaded onto a computer or other programmable data processing terminal devices to make a series of operational steps to be performed on the computer or the other programmable terminal devices to produce a computer-implemented process, so that the instructions executed on the computer or other programmable terminal devices provide steps for implementing the functions specified in one or more processes in the flowchart and/or one or more blocks in the block diagram.

Although preferred embodiments of the present application have been described, those skilled in the art, once they learn the basic inventive concepts, may make additional changes and modifications to these embodiments. Therefore, the appended claims are intended to be interpreted as including the preferred embodiments and all changes and modifications falling within the scope of some embodiments of the present application.

## Claims

1. A mode switching control method for a vehicle with a hybrid power, comprising:
acquiring a current driving mode and a travelling state information of the vehicle;
determining whether the vehicle is in a target working condition based on the current driving mode and the travelling state information, wherein the target working condition represents a working condition in which an engine of the vehicle experiences an abnormal start-stop phenomena; and
controlling the vehicle to switch from the current driving mode to an idle electric four-wheel drive mode when it is determined that the vehicle is in the target working condition, wherein in the idle electric four-wheel drive mode, a front drive motor and a rear drive motor of the vehicle are in a driving state, and the engine remains in an idle state.

2. The mode switching control method for the vehicle with the hybrid power according to claim 1, wherein the determining whether the vehicle is in the target working condition based on the current driving mode and the travelling state information comprises:
determining an initial working condition of the vehicle based on the travelling state information; and
determining the vehicle is in the target working condition in a case that the current driving mode is a series mode and the initial working condition is a slipping working condition, or, in a case that the current driving mode is a direct drive mode and the initial working condition is a braking working condition.

3. The mode switching control method for the vehicle with the hybrid power according to claim 2, wherein the travelling state information comprises a vehicle speed, a master cylinder braking pressure, and a speed of each wheel; and
the determining the initial working condition of the vehicle based on the travelling state information comprises:
determining the initial working condition is the slipping working condition in a case that the speed of each wheel satisfies a preset slipping condition; and
determining the initial working condition is the braking working condition in a case that the vehicle speed is less than a vehicle speed threshold and/or the master cylinder braking pressure is greater than a pressure threshold and/or a travel of a brake pedal is greater than a travel threshold.

4. The mode switching control method for the vehicle with the hybrid power according to claim 3, wherein the determining the initial working condition is the slipping working condition in the case that the speed of each wheel satisfies the preset slipping condition comprises:
based on the speed of each wheel, determining a first speed difference between a left rear wheel and a right rear wheel and a first duration time of the first speed difference, and a second speed difference between an average speed of two wheels on a front axle and an average speed of two wheels on a rear axle and a second duration time of the second speed difference; and
determining the initial working condition is the slipping working condition in a case that the first speed difference is greater than a first speed difference threshold and the first duration time is greater than a first duration time threshold, or, in a case that the second speed difference is greater than a second speed difference threshold and the second duration time is greater than a second duration time threshold.

5. The mode switching control method for the vehicle with the hybrid power according to claim 2, wherein the controlling the vehicle to switch from the current driving mode to the idle electric four-wheel drive mode comprises:
controlling the vehicle to switch from the series mode to the idle electric four-wheel drive mode according to a preset first switching strategy; or
controlling the vehicle to switch from the direct drive mode to the idle electric four-wheel drive mode according to a preset second switching strategy.

6. The mode switching control method for the vehicle with the hybrid power according to claim 5, wherein the controlling the vehicle to switch from the series mode to the idle electric four-wheel drive mode according to the preset first switching strategy comprises:
sending a first torque control request containing an idle torque to an engine controller to make the engine controller control a torque of the engine to decrease to the idle torque in response to the first torque control request;
sending a synchronizer gear engagement request and an idle electric four-wheel drive mode activation request to a transmission controller to make the transmission controller control a clutch to open when determining that the torque of the engine is below a torque threshold in response to the idle electric four-wheel drive mode activation request, and control a synchronizer to switch from a neutral position to a target gear position in response to the synchronizer gear engagement request, wherein the torque threshold is greater than the idle torque; and
when it is determined that the clutch is in an open state, sending an idle activation request to the engine controller to make the engine controller control the engine to remain in the idle state in response to the idle activation request.

7. The mode switching control method for the vehicle with the hybrid power according to claim 6, wherein the controlling the torque of the engine to decrease to the idle torque comprises:
sending a torque increase request of a rear drive motor to a motor controller to make the motor controller control a torque of the rear drive motor to increase to a first target torque in response to the torque increase request of the rear drive motor; and
sending a torque decrease request of a front drive motor to the motor controller to make the motor controller control a torque of the front drive motor to decrease to a second target torque in response to the torque decrease request of the front drive motor of the front drive motor.

8. The mode switching control method for the vehicle with the hybrid power according to claim 6, wherein the controlling the synchronizer to switch from the neutral position to the target gear position comprises:
sending a gear shift operation signal to the transmission controller after determining that the clutch is in the open state to make the transmission controller control the synchronizer to switch from the neutral position to the target gear position when receiving the gear shift operation signal and the synchronizer gear engagement request simultaneously.

9. The mode switching control method for the vehicle with the hybrid power according to claim 6, wherein the sending the idle activation request to the engine controller when it is determined that the clutch is in the open state to make the engine controller control the engine to remain in the idle state in response to the idle activation request further comprises:
sending an actual operation mode setting information to the transmission controller when it is determined that the clutch is in the open state, wherein the actual operation mode setting information indicates that the vehicle has switched from the series mode to the idle electric four-wheel drive mode.

10. The mode switching control method for the vehicle with the hybrid power according to claim 5, wherein the controlling the vehicle to switch from the direct drive mode to the idle electric four-wheel drive mode according to the preset second switching strategy comprises:
sending a synchronizer gear shift request and an idle electric four-wheel drive mode activation request to a transmission controller to make the transmission controller control a synchronizer to switch from a current gear position to a target gear position in response to the synchronizer gear shift request, and return a torque intervention request containing an idle torque in response to the idle electric four-wheel drive mode activation request;
sending a second torque control request containing the idle torque to an engine controller in response to the torque intervention request to make the engine controller control a torque of the engine to decrease to the idle torque in response to the second torque control request, to make the transmission controller control a clutch to open when it is determined that the torque of the engine has decreased to the idle torque; and
sending an idle activation request to the engine controller when it is determined that the clutch is in an open state to make the engine controller control the engine to remain in the idle state in response to the idle activation request.

11. The mode switching control method for the vehicle with the hybrid power according to claim 10, wherein the sending the idle activation request to the engine controller when it is determined that the clutch is in the open state to make the engine controller control the engine to remain in the idle state in response to the idle activation request, further comprises:
when it is determined that the clutch is in the open state, sending a crankshaft end torque request to the transmission controller to make the transmission controller restore a torque value in the torque intervention request and stop sending the torque intervention request after detecting that the clutch is in the open state and receiving the crankshaft end torque request.

12. A mode switching control device for a vehicle with a hybrid power, comprising:
an acquisition module, configured to acquire a current driving mode and a travelling state information of the vehicle;
a determination module, configured to determine whether the vehicle is in a target working condition based on the current driving mode and the travelling state information, wherein the target working condition represents a working condition in which an engine of the vehicle experiences an abnormal start-stop phenomena; and
a control module, configured to control the vehicle to switch from the current driving mode to an idle electric four-wheel drive mode when it is determined that the vehicle is in the target working condition, wherein in the idle electric four-wheel drive mode, a front drive motor and a rear drive motor of the vehicle are in the driving state, and the engine remains in an idle state.

13. A storage medium storing a machine-executable instruction, wherein when the machine-executable instruction executed by a processor, the mode switching control method for the vehicle with the hybrid power according to any one of claims 1 to 11 is implemented.

14. A vehicle comprising a processor and a memory, wherein the memory stores a machine-executable instruction being capable of be executed by the processor, and the processor is configured to execute the machine-executable instruction to implement the mode switching control method for the vehicle with the hybrid power according to any one of claims 1 to 11.
